# EUROPÄISCHE PATENTSCHRIFT

(11) **EP 2 995 816 B1**
(45) Veröffentlichungstag und Bekanntmachung des Hinweises auf die Patenterteilung: **22.04.2020**
(21) Anmeldenummer: 14003133.7
(22) Anmeldetag: 10.09.2014
(51) Int. Cl.: F04B 49/06, H02P 23/14, F01N 3/20

(54) **VERFAHREN ZUR ÜBERWACHUNG UND REGELUNG EINES ELEKTROMOTORS ZUM ANTRIEB EINER PUMPE**
METHOD FOR MONITORING AND CONTROLLING AN ELECTRIC MOTOR FOR DRIVING A PUMP
PROCÉDÉ DE SURVEILLANCE ET DE COMMANDE D'UN MOTEUR ÉLECTRIQUE D'ENTRAÎNEMENT D'UNE POMPE

(43) Veröffentlichungstag der Anmeldung: 16.03.2016
(73) Patentinhaber: maxon international ag, 6072 Sachseln (CH)
(72) Erfinder: Wallimann, Hugo, CH-6064 Kerns (CH); Anton, Ludwin, CH-6072 Sachseln (CH)
(74) Vertreter: Grünecker Patent- und Rechtsanwälte PartG mbB

(56) Entgegenhaltungen:
- DE-A1-102005 028 344
- DE-A1-102009 035 940
- US-A1- 2008 092 750
- US-B1- 6 599 095

## Beschreibung

Die vorliegende Erfindung betrifft ein Verfahren zur Überwachung eines zum Antrieb einer Pumpe dienenden Elektromotors nach dem Oberbegriff des unabhängigen Anspruchs 1.

Aus dem Stand der Technik sind zahlreiche Systeme bekannt, bei welchen ein Fluid, insbesondere ein inkompressibles Medium, mittels einer elektromotorisch betriebenen Pumpe gefördert und gegebenenfalls über entsprechende Düsen oder dergleichen in ein bestimmtes Volumen eingespritzt oder eingesprüht wird. Man denke beispielsweise an Systeme zur Kraftstoffeinspritzung. Selbst wenn der Druck im Förderkreislauf im Mittel annähernd gleichbleibt oder gleichbleiben soll, kann es bei einigen dieser Systeme aufgrund verschiedenster Einflüsse zu mehr oder minder hochfrequenten Druckschwankungen kommen. Diese können beispielsweise durch die Bauart der Pumpe selbst bedingt sein. So kommt es beispielsweise im Förderkreislauf von Membranpumpen zu relativ hohen Druckschwankungen, obwohl der mittlere Druck im Förderkreislauf annähernd konstant bleibt. Dennoch müssen Druckänderungen, die sich nicht auf die unvermeidbaren periodisch wiederkehrenden Druckschwankungen des Pumpenmechanismus zurückführen lassen, zuverlässig erkannt werden, damit die Regelung des Pumpenantriebs auf eventuell im Förderkreislauf auftretende Störungen reagieren und gegebenenfalls die Drehzahl der Pumpe nachregeln kann.

Um den Druck im Förderkreislauf zu ermitteln, sind bei bestehenden Systemen nach dem Stand der Technik üblicherweise ein oder sogar mehrere Drucksensoren vorgesehen, deren Signale von der Steuer- und Regeleinheit des Pumpenantriebs ausgewertet werden. Darüber hinaus ist zumeist ein Druckbegrenzungsventil vorgesehen, das geöffnet wird, wenn im Förderkreislauf beispielsweise ein Problem auftritt, das zur vollständigen Blockade des Förderkreislaufs führt. Auf diese Weise wird eine Beschädigung des Pumpenantriebs vermieden, wenn dieser trotz Auftreten der Störung weiterläuft. Insbesondere wird dadurch verhindert, dass der zum Antrieb der Pumpe dienende Elektromotor und/oder Bauelemente des Förderkreislaufs nachhaltig Schaden nehmen..

Ein Beispiel für ein derartiges System, bei dem es grundsätzlich zu Druckschwankungen im Förderkreislauf kommt, ist eine Zuführeinrichtung zur Abgasnachbehandlung von Verbrennungskraftmaschinen, insbesondere von großen Dieselmotoren. In diesem Bereich hat sich über die letzten Jahren eine Technik durchgesetzt, bei der eine Ammoniak- bzw. harnstoffbasierte Lösung in den Abgasstrang des Verbrennungskraftmotors eingespritzt wird, um den Gesamtausstoß von Stickoxiden zu vermindern. Die Lösung wirkt als Katalysator und bewirkt, dass die Stickoxide in Stickstoff und Wasserdampf aufgespalten werden. Eine derartige Zuführeinrichtung zur Abgasnachbehandlung ist beispielsweise aus DE 102009035940 A1 bekannt. Auch bei dieser Zuführeinrichtung wird der Druck im Förderkreislauf durch einen Drucksensor ermittelt und durch den Pumpenantrieb selbst sowie durch ein Druckbegrenzungsventil geregelt. Drucksensor und Druckbegrenzungsventil stellen zusätzliche Kosten und vor allen Dingen zusätzliche mögliche Fehlerquellen dar.

Elektromotoren, die zum Antrieb von Pumpen verwendet werden, sind zumeist als elektrisch kommutierte Elektromotoren ausgeführt. Sie werden durch wechselweises Beschalten ihrer Wicklungen derart angesteuert, dass sich ein rotierendes magnetisches Feld ergibt, welches ein mechanisches Drehmoment erzeugt, das auf den Rotor des Elektromotors wirkt. Zur Erzeugung des rotierenden magnetischen Feldes umfasst der Stator mindestens zwei, häufig sogar drei Wicklungen, die in Bezug auf die Rotorachse in Umfangsrichtung zueinander versetzt angeordnet sind und die verschiedenen Phasen des Elektromotors bilden. Das wechselweise Beschalten der Wicklungen übernimmt ein Umrichter, der in aller Regel von einer Gleichspannungsquelle gespeist wird. Um die Wicklungen unterschiedlich stark mit Strom beaufschlagen zu können, arbeitet der Umrichter nach dem Prinzip der Pulsweitenmodulation. Die Steuerung des Elektromotors übernimmt eine Steuer- und Regeleinheit, der gewisse Parameter als Eingangsgrößen zugeführt werden. So wird der Steuer- und Regeleinheit beispielsweise die gewünschte Motordrehzahl als Eingangsgröße vorgegeben. Um eine Überhitzung der Statorwicklungen, welche zu einer Zerstörung des Elektromotors führen kann, zu vermeiden, werden üblicherweise die in den einzelnen Wicklungen auftretenden Wicklungsströme erfasst, so dass diese in die Regelung des Elektromotors Eingang finden können. Über die Wicklungsströme kann auch das Drehmoment des Elektromotors eingestellt werden.

Ein Verfahren zu Regelung eines mehrphasigen elektronisch kommutierten Elektromotors ist beispielsweise in DE 102005028344 A1 beschrieben. Bei diesem Verfahren wird der addierte Wicklungsstrom im Fußpunkt des sternförmig geschalteten Elektromotors gemessen. Der momentane Stromspitzenwert dieses addierten Wicklungsstroms wird der Steuerungs- und Regeleinheit als Regelgröße zugeführt.

Ein Verfahren zur Überwachung eines zum Antrieb einer Pumpe dienenden Elektromotors ist beispielsweise aus WO 2012/053954 A1 bekannt. Bei diesem Verfahren werden Werte eines im Elektromotor auftretenden Stroms innerhalb eines zeitlichen Intervalls gemessen. Der Strom unterliegt innerhalb dieses zeitlichen Intervalls, insbesondere aufgrund von Druckschwankungen im Förderkreislauf der Pumpe, die sich auf das Drehmoment des Elektromotors auswirken, gewissen Schwankungen. Um einen Fehler im System zu erkennen, werden die innerhalb des zeitlichen Intervalls auftretenden lokalen Maxima des Stromverlaufs mit einem Grenzwert verglichen. Ein Fehler wird erkannt, wenn alle lokalen Maxima des Stromverlaufs unterhalb des Grenzwertes liegen. Diese Art der Fehlererkennung erlaubt es, festzustellen, ob beispielsweise die Anschlussverdrahtung der Motorwicklungen defekt bzw. unterbrochen ist. Anstatt alle lokalen Maxima des Stromverlaufs innerhalb des zeitlichen Intervalls mit dem Grenzwert zu vergleichen, kann aus den Stromwerten der lokalen Maxima auch ein Mittelwert gebildet werden, der anschließend mit dem Grenzwert verglichen wird.

Ein Verfahren gemäß dem Oberbegriff des unabhängigen Anspruchs 1 ist beispielsweise aus US 6,599,095 B1 und aus US 2008/0092750 A1 bekannt.

Aufgabe der vorliegenden Erfindung ist es, ein Verfahren anzugeben, das eine besonders einfache und kostengünstige Steuerung und Regelung eines Elektromotors erlaubt, welcher zum Antrieb einer Pumpe dient, in deren Förderkreislauf periodisch wiederkehrende Druckschwankungen auftreten.

Die Aufgabe wird gelöst durch die Merkmale des unabhängigen Anspruchs 1. Demnach liegt bei einem Verfahren gemäß dem Oberbegriff des unabhängigen Anspruchs 1 dann eine erfindungsgemäße Lösung der Aufgabe vor, wenn das zeitliche Intervall (T) größer ist als eine Periodendauer (P), die sich aufgrund von systembedingten periodisch wiederkehrenden Druckschwankungen im Förderkreislauf der Pumpe (1) ergibt.

Im Gegensatz zu dem aus WO 2012053954 A1 bekannten Verfahren wird gemäß der vorliegenden Erfindung somit kein Mittelwert der lokalen Maxima des Stromverlaufs innerhalb des zeitlichen Intervalls ermittelt, sondern der tatsächliche Mittelwert des Stromverlaufs. Die Erfindung macht sich zunutze, dass der Wicklungsstrom direkt abhängig ist vom Drehmoment des Elektromotors, welches wiederum von dem Druck abhängt, der im Förderkreislauf der Pumpe herrscht. Durch das erfindungsgemäße Verfahren wird somit die Überwachung des Drucks im Förderkreislauf in die Motorsteuerung integriert. Lokale Maxima des Drucks, die auf die pumpenspezifischen, periodisch wiederkehrenden Druckschwankungen zurückzuführen sind, erzeugen lokale Maxima des Wicklungsstroms. Die Ermittlung der lokalen Maxima des Wicklungsstroms kann daher keinen Aufschluss darüber geben, ob im Förderkreislauf ein Überdruck herrscht, der eventuell eine Nachregelung des Elektromotors erfordert. Erfindungsgemäß wird daher der Mittelwert des Stromverlaufs innerhalb des zeitlichen Intervalls ermittelt. Dieser hängt von dem mittleren Druck im Förderkreislauf ab und steigt somit an, wenn auch der Druck im Förderkreislauf ansteigt. Auf diese Weise ist es daher möglich, den Verlauf des mittleren Drucks im Förderkreislauf ohne einen extra zu diesem Zweck vorgesehenen Drucksensor zu erfassen und der Motorregelung als Eingangsparameter zuzuführen. Die Erfindung ermöglicht somit unter anderem, dass der mittlere Druck im Förderkreislauf der Pumpe allein auf Basis des Wicklungsstroms konstant gehalten bzw. auf einen bestimmten Wert geregelt werden kann.

Das zeitliche Intervall, innerhalb dessen die Stromwerte des Wicklungsstroms gemessen werden, muss so bemessen sein, dass die systembedingten, periodisch wiederkehrenden Schwankungen des Drucks zuverlässig gemittelt werden können. Es ist daher von Vorteil, wenn das zeitliche Intervall so bemessen ist, dass innerhalb des zeitlichen Intervalls nicht nur ein lokales Maximum, sondern mehrere lokale Maxima des Wicklungsstroms auftreten. So kann vorzugsweise vorgesehen sein, dass zumindest fünf lokale Maxima des Wicklungsstroms in das zeitliche Intervall fallen. Ferner wandert das zeitliche Intervall zur Bestimmung des Mittelwerts fortlaufend mit. Beispielsweise kann ein erster Mittelwert aus den gemessenen Stromwerten in den konkret aufeinander folgenden Zeitpunkten 1, 2, 3, 4, 5, 6, 7, 8, 9, 10 ermittelt werden, wobei ein darauffolgender zweiter Mittelwert aus den gemessenen Stromwerten in den konkret aufeinanderfolgenden Zeitpunkten 2, 3, 4, 5, 6, 7, 8, 9, 10, 11 ermittelt wird. Weiter ist es von Vorteil, wenn die Abtastrate zur Messung der Stromwerte wesentlich über der Frequenz der systembedingten periodisch wiederkehrenden Druckschwankungen im Förderkreislauf liegt. Nur so ist eine zuverlässige Ermittlung des Mittelwerts des Wicklungsstroms gewährleistet. Vorzugsweise liegt die Frequenz der Abtastung um zumindest eine Größenordnung über der Frequenz der systembedingt periodisch wiederkehrenden Druckschwankungen.

Vorteilhafte Ausgestaltungen der vorliegenden Erfindung sind Gegenstand der Unteransprüche.

In einer besonders bevorzugten Ausführungsform der vorliegenden Erfindung wird ein von der Motorregelung vorgegebener maximal zulässiger Wert für den Motorspeisungsstrom herabgesetzt, falls der Mittelwert der gemessenen Stromstärke größer ist als der vorgegebene Referenzwert. Der Referenzwert legt somit quasi den zulässigen Druck im Förderkreislauf der Pumpe fest. Steigt dieser an, beispielsweise aufgrund einer Störung im Förderkreislauf, so wird der maximal zulässige Wert für den Motorspeisungsstrom herabgesetzt, um den Druck wieder auf den Ausgangswert zurück zu regeln und zu verhindern, dass der Elektromotor oder der Förderkreislauf aufgrund der steigenden Belastung Schaden nehmen. Die vorliegende Erfindung hat dabei den Vorteil, dass zur Begrenzung des Drucks kein zusätzlich vorgesehenes Überdruckventil erforderlich ist.

In einer vorteilhaften Ausführungsform wird der Motorspeisungsstrom durch eine Kaskaden-Regelung mit einem schnellen, unterlagerten Regelkreis auf den maximal zulässigen Wert begrenzt. Dabei werden die gemessenen Stromwerte ohne Mittelwertbildung direkt über einen schnellen, in Hardware ausgeführten Komparator mit dem Motorspeisungsstrom verglichen. Sollten die gemessenen Stromwerte über dem maximal zulässigen Motorspeisungsstrom liegen, so wird das Tastverhältnis der Pulsweitenmodulation des Umrichters verändert.

Eine besonders einfache Regelung ergibt sich, wenn der maximal zulässige Wert für den Motorspeisungsstrom um die Differenz zwischen Mittelwert und Referenzwert herabgesetzt wird. Um eine unruhige Regelung zu vermeiden, ist diese Differenz auf eine vorgegebene Maximaldifferenz begrenzt. Die Differenzen werden mittels eines integrierenden Reglers aufintegriert und solange von dem maximal zulässigen Wert für den Motorspeisungsstrom abgezogen, bis der resultierende Druck im System gesunken ist und der Mittelwert des Wicklungsstroms dadurch wieder unter den Referenzwert fällt. Für die Reduzierung des maximal zulässigen Werts des Motorspeisungsstroms kann ebenfalls eine vorgegebene Maximaldifferenz vorgesehen sein.

In einer weiteren bevorzugten Ausführungsform der vorliegenden Erfindung wird der maximal zulässige Wert für den Motorspeisungsstrom maximal auf die Hälfte des Referenzwertes reduziert. Sofern im Förderkreislauf der Pumpe ein Fehler vorliegt und der Druck deshalb nicht absinken kann, wird somit solange nachgeregelt, bis der Motorspeisungsstrom nicht mehr ausreicht, um den Motor anzutreiben, so dass der Motor stehenbleibt. Dadurch, dass der maximal zulässige Wert für den Motorspeisungsstrom nur auf die Hälfte des Referenzwertes reduziert wird, liegt an der Pumpe jedoch weiterhin ein Drehmoment an, was dazu führt, dass Elektromotor und Pumpe wieder anlaufen, wenn der Fehler im Förderkreislauf behoben ist und der Druck wieder sinkt. Bei einem sensorlos kommutierten Elektromotor, welcher nicht automatisch anlaufen kann, kann alternativ nach einem Stillstand von vorgegebener Dauer der Motorspeisungsstrom wieder derart erhöht werden, so dass der Elektromotor bei einem Normaldruck im Förderkreislauf wieder anlaufen kann.

In einer weiteren bevorzugten Ausführungsform der vorliegenden Erfindung wird der maximal zulässige Wert für den Motorspeisungsstrom wieder erhöht, sobald der Mittelwert der gemessenen Stromwerte unter den Referenzwert fällt. So werden nach Behebung des Fehlers die ursprünglichen Strömungs- und Druckverhältnisse im Förderkreislauf wiederhergestellt.

In einer weiteren bevorzugten Ausführungsform der vorliegenden Erfindung ist der Elektromotor mehrphasig ausgeführt, wobei die Stromwerte im Fußpunkt des Umrichters gemessen werden. Dies gewährleistet eine besonders einfache, kostengünstige und vollständige Berücksichtigung sämtlicher Wicklungsströme. Es ist lediglich ein Stromsensor im Fußpunkt des Umrichters erforderlich.

In einer weiteren bevorzugten Ausführungsform der vorliegenden Erfindung werden die Stromwerte innerhalb des zeitlichen Intervalls mit einer Abtastrate gemessen, deren Frequenz um eine Größenordnung über der Frequenz der systembedingten Druckschwankungen im Förderkreislauf der Pumpe liegt. Auch dies erhöht die Genauigkeit der Ermittlung des Mittelwerts.

In einer weiteren bevorzugten Ausführungsform der vorliegenden Erfindung wird der Mittelwert aus einer Anzahl von Stromwerten ermittelt, die einer n-ten Potenz von 2 entspricht. Dabei sind die Messzeitpunkte idealerweise zwischen zwei lokalen Maxima des Stromverlaufs verteilt.

Die vorliegende Erfindung stellt ferner einen maschinenlesbaren Datenträger bereit, auf dem ein Programm gespeichert ist, das eine Befehlsfolge enthält, bei deren Ausführung durch einen Prozessor das erfindungsgemäße Verfahren ausgeführt wird. Ferner stellt die Erfindung auch eine Motorregelung für einen Elektromotor zur Ausführung des erfindungsgemäßen Verfahrens bereit.

Die Erfindung bezieht sich ferner auch auf einen Elektromotor zum Antrieb einer Pumpe, wobei der Elektromotor über eine Motorregelung zur Ausführung des erfindungsgemäßen Verfahrens verfügt. Vorzugsweise ist der Elektromotor als elektronisch kommutierter Elektromotor ausgeführt. Weiter vorzugsweise handelt es sich um einen Außenläufermotor. Alternativ kann selbstverständlich auch ein bürstenbehafteter Gleichstromelektromotor mit einer Rotorwicklung verwendet werden. Der Elektromotor eignet sich vorzugsweise zum Antrieb einer Membranpumpe. Jedoch können auch andere Pumpenmechanismen, die systembedingt periodisch wiederkehrende Druckschwankungen hervorrufen, mit dem Elektromotor betrieben werden.

Die Erfindung eignet sich ganz besonders für eine Vorrichtung zur Abgasnachbehandlung, bei welcher eine Flüssigkeit durch die Pumpe unter Druck gesetzt und über zumindest eine Auslassvorrichtung in den Abgasstrang einer Verbrennungskraftmaschine eingespritzt oder eingesprüht wird. Bei der Flüssigkeit kann es sich beispielsweise um eine Harnstoff-Wasser-Lösung handeln.

Ein Ausführungsbeispiel der vorliegenden Erfindung wird im Folgenden anhand von Zeichnungen näher erläutert. Es zeigen:
- Figur 1: eine schematische Schaltungsanordnung zur Überwachung und Regelung eines zum Antrieb einer Membranpumpe dienenden Elektromotors,
- Figur 2: einen beispielhaften Verlauf des Wicklungsstroms im Elektromotor,
- Figur 3: ein Ablaufschema des erfindungsgemäßen Verfahrens nach einer bevorzugten Ausführungsform, und
- Figur 4: eine Vorrichtung zur Abgasnachbehandlung gemäß der vorliegenden Erfindung.

Für die folgenden Ausführungen gilt, dass gleiche Teile durch gleiche Bezugszeichen bezeichnet werden. Sofern in einer Zeichnung Bezugszeichen enthalten sind, auf die in der zugehörigen Figurenbeschreibung nicht näher eingegangen wird, so wird auf vorangehende oder nachfolgende Figurenbeschreibungen Bezug genommen.

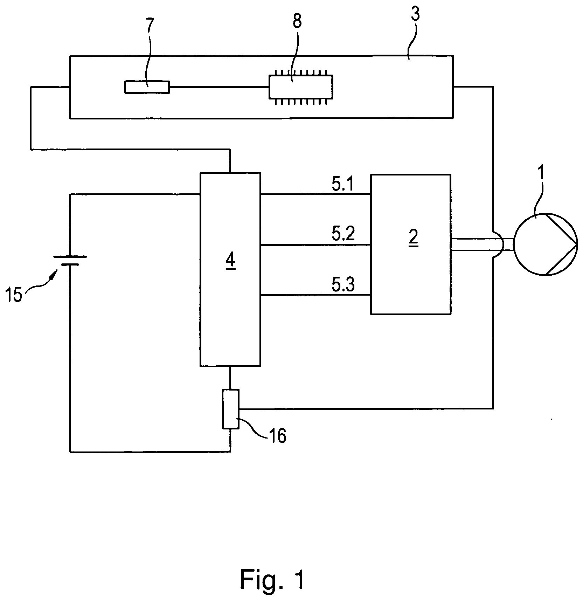

Figur 1 zeigt eine schematische Schaltungsanordnung zur Überwachung und Regelung eines zum Antrieb einer Membranpumpe 1 dienenden Elektromotors 2. Der Elektromotor ist als elektronisch kommutierter Außenläufermotor ausgeführt. Er verfügt über drei Statorwicklungen, die in Bezug auf die Rotorachse des Elektromotors in Umfangsrichtung versetzt zueinander angeordnet sind. Die Wicklungsanschlüsse der drei Statorwicklungen sind in der Darstellung mit den Bezugszeichen 5.1, 5.2 und 5.3 bezeichnet. Als Stromversorgung ist eine Gleichspannungsquelle 15 vorgesehen, die einen Umrichter 4 speist, welcher wiederum die wechselweise Beschaltung der drei Statorwicklungen übernimmt. Die Wicklungsströme der drei Statorwicklungen fließen gemeinsam über den Fußpunkt 6 des Umrichters 4 ab. Der resultierende Gesamtwicklungsstrom wird im Fußpunkt 6 mittels eines Stromsensors 16 gemessen. Prinzipiell kann der Strom auch an einer anderen als der eingezeichneten Stelle gemessen werden. Beispielsweise ist es möglich, den Strom erst nach dem Umrichter zu messen. Auch besteht die Möglichkeit, den Wicklungsstrom einer oder mehrerer Statorwicklungen direkt in der jeweiligen Wicklung zu erfassen. Das Ausgangssignal des Stromsensors 16 wird der Motorregelung 3 zugeführt und dort verarbeitet. Die Motorregelung umfasst hierzu einen Prozessor 8, der ein Programm ausführt, das auf einem ebenfalls der Motorregelung zugeordneten, maschinenlesbaren Datenträger 7 abgespeichert ist. Bei dem Datenträger kann es sich beispielsweise um einen fest installierten oder aber auch um einen entfernbaren Datenspeicher handeln.

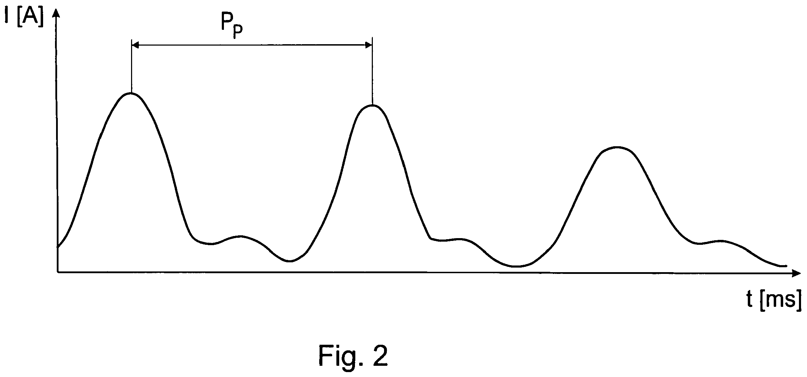

Figur 2 zeigt einen beispielhaften Verlauf des im Fußpunkt 6 gemessenen resultierenden Gesamtwicklungsstroms.. Aufgetragen ist der Strom I in Ampere über der Zeit t in Millisekunden. Deutlich zu erkennen ist ein periodisch schwankender Verlauf des Wicklungsstroms, wobei der Abstand zwischen zwei lokalen Maxima der Periodendauer P_{P} entspricht, die sich aufgrund der systembedingten periodisch wiederkehrenden Druckschwankungen im Förderkreislauf der Membranpumpe 1 ergibt. Die drei größeren in der Darstellung gezeigten Anstiege des Stromverlaufs entsprechen jeweils einem Pumpenhub der Membranpumpe, die drei kleineren Anstiege dazwischen resultieren aus dem Nachhub der Pumpe. Erfindungsgemäß wird ein momentaner Mittelwert des Wicklungsstroms ermittelt. Hierzu werden innerhalb eines zeitlichen Intervalls T mehrere diskrete Stromwerte gemessen und anschließend ein Mittelwert aus den gemessenen Stromwerten ermittelt. Das zeitliche Intervall T ist vorzugsweise größer als die Periodendauer P_{P}. Für eine möglichst genaue Ermittlung des Mittelwerts empfiehlt es sich, wenn die Abtastrate um mindestens eine Größenordnung größer ist als die Frequenz der wiederkehrenden periodischen Schwingungen. Der ermittelte Mittelwert des Wicklungsstroms wird sodann von der Motorregelung 3 als Eingangsparameter verarbeitet. Es wird darauf hingewiesen, dass die Ermittlung des Mittelwerts sowohl in der Motorregelung 3 selbst als auch in einer separaten Schaltung erfolgen kann. Im dargestellten Beispiel liegt der zu Beginn des Stromverlaufs ermittelte Mittelwert über einem vorbestimmten Grenzwert. Der maximal zulässige Motorspeisungsstrom wird daher schrittweise zurückgeregelt, was anhand des Rückgangs der lokalen Maxima des Stromverlaufs deutlich wird und nachfolgend näher erläutert werden soll.

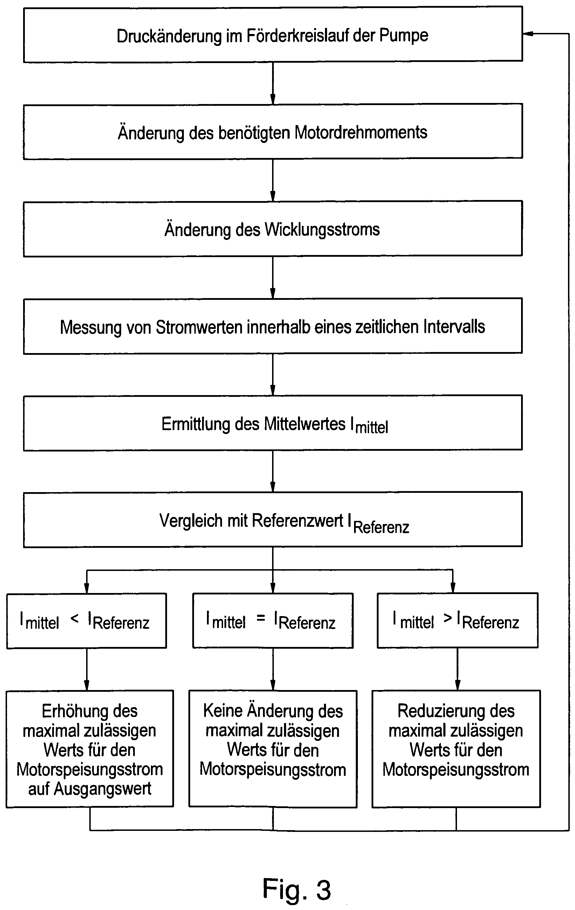

Figur 3 zeigt den Ablauf des erfindungsgemäßen Verfahrens nach einer bevorzugten Ausführungsform. Es wird angenommen, dass der mittlere Druck im Förderkreislauf der Pumpe eine Änderung erfährt. Die Änderung des mittleren Drucks im Förderkreislauf bewirkt eine Änderung des benötigten Motordrehmoments, die wiederum mit einer Änderung des Wicklungsstroms einhergeht. Durch die Messung diskreter Stromwerte innerhalb des zeitlichen Intervalls T kann der momentane Mittelwert Iₘᵢₜₜₑₗ des Wicklungsstroms ermittelt werden. Dieser wird in der Motorregelung 3 mit einem vorgegebenen Referenzwert I_{Referenz} verglichen. Der vorgegebene Referenzwert stellt einen Grenzstromwert dar. Solange der Mittelwert des Wicklungsstroms dem Grenzwert entspricht oder bei der gewünschten Drehzahl des Elektromotors sogar kleiner ist als der Referenzwert, wird der Elektromotor weiterhin unverändert bestromt. Steigt der Mittelwert jedoch über den Referenzwert, so wird der maximal zulässige Wert für den Motorspeisungsstrom herabgesetzt. Denn der Anstieg des Mittelwerts des Wicklungsstroms geht einher mit einer unerwünschten Erhöhung des mittleren Drucks im Förderkreislauf der Pumpe. Der Referenzwert I_{Referenz} wird daher so festgelegt, dass sich im Förderkreislauf ein gewünschter Druck einstellt bzw. der mittlere Druck nicht über den gewünschten Druck ansteigt. Der maximal zulässige Wert für den Motorspeisungsstrom wird solange herunter geregelt, bis der mittlere Druck im Förderkreislauf der Pumpe wieder sinkt und der Mittelwert des Wicklungsstroms dadurch unter den Referenzwert I_{Referenz} fällt. Kann sich der Druck nicht abbauen, beispielsweise weil die Förderleitung der Pumpe zugesetzt oder aus anderen Gründen versperrt ist, so wird solange nachgeregelt, bis der Motorspeisungsstrom des Elektromotors nicht mehr ausreicht, um den Elektromotor anzutreiben, so dass dieser stehenbleibt. Fällt der Druck jedoch wieder unter den Referenzwert I_{Referenz}, so kann der Elektromotor wieder anlaufen, und der maximal zulässige Wert für den Motorspeisungsstrom wird schrittweise wieder auf den Ausgangswert erhöht.

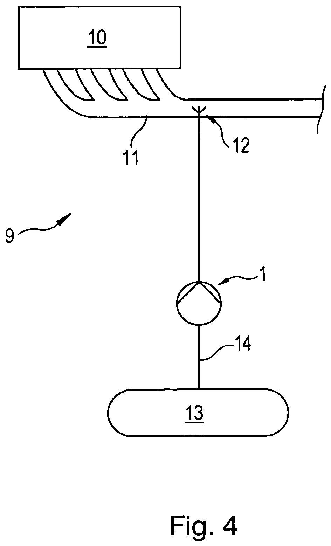

Figur 4 zeigt eine Vorrichtung 9 zur Abgasbehandlung gemäß der vorliegenden Erfindung. Die Pumpe 1 aus Figur 1 dient bei dieser Vorrichtung zur Förderung einer harnstoffbasierten wässrigen Lösung, die über eine Düse 12 als Katalysator in den Abgasstrang 11 einer Verbrennungskraftmaschine 10, beispielsweise einem großen Dieselmotor, eingespritzt wird. Die wässrige Lösung wird dazu aus einem entsprechenden Tank 13 über eine Leitung 14, in der sich die Pumpe 1 befindet, zur Düse 12 befördert.

## Patentansprüche

1. Verfahren zur Überwachung eines zum Antrieb einer Pumpe (1) dienenden Elektromotors (2), wobei innerhalb eines zeitlichen Intervalls (T) Stromwerte gemessen werden, ein Mittelwert der gemessenen Stromwerte ermittelt, und dieser Mittelwert mit einem vorgegebenen Referenzwert verglichen wird, wobei sich das Verfahren auf die Regelung des Elektromotors (2) erstreckt, wobei die gemessenen Stromwerte den Verlauf des Wicklungsstroms des Elektromotors (2) wiedergeben und unabhängig davon, ob sie einem momentanen Maximum des Stromverlaufs zuzuordnen sind, in die Ermittlung des Mittelwerts Eingang finden, und wobei der Mittelwert als Eingangsparameter von der Motorregelung (3) berücksichtigt wird, **dadurch gekennzeichnet, dass** das zeitliche Intervall (T) größer ist als eine Periodendauer (P), die sich aufgrund von systembedingten periodisch wiederkehrenden Druckschwankungen im Förderkreislauf der Pumpe (1) ergibt.

2. Verfahren nach Anspruch 1, **dadurch gekennzeichnet, dass** ein von der Motorregelung (3) vorgegebener maximal zulässiger Wert für den Motorspeisungsstrom herabgesetzt wird, falls der Mittelwert der gemessenen Stromwerte größer ist als der vorgegebene Referenzwert.

3. Verfahren nach Anspruch 2, **dadurch gekennzeichnet, dass** der maximal zulässige Wert für den Motorspeisungsstrom um die Differenz zwischen Mittelwert und Referenzwerts herabgesetzt wird.

4. Verfahren nach Anspruch 3, **dadurch gekennzeichnet, dass** die Differenzen mittels eines integrierenden Reglers aufintegriert und solange von dem maximal zulässigen Wert für den Motorspeisungsstrom abgezogen werden, bis der resultierende Druck im System gesunken ist und der Mittelwert des Wicklungsstroms dadurch wieder unter den Referenzwert fällt.

5. Verfahren nach einem der Ansprüche 2 bis 4, **dadurch gekennzeichnet, dass** der maximal zulässige Wert für den Motorspeisungsstrom maximal auf die Hälfte des Referenzwertes reduziert wird.

6. Verfahren nach einem der Ansprüche 2 bis 5, **dadurch gekennzeichnet, dass** der maximal zulässige Wert für den Motorspeisungsstrom wieder erhöht wird, sobald der Mittelwert der gemessenen Stromwerte unter den Referenzwert fällt.

7. Verfahren nach einem der Ansprüche 1 bis 6, **dadurch gekennzeichnet, dass** der Elektromotor (2) mehrphasig ausgeführt ist, wobei die Stromwerte im Fußpunkt (6) des Umrichters (4) gemessen werden.

8. Verfahren nach einem der Ansprüche 1 bis 7, **dadurch gekennzeichnet, dass** die Stromwerte innerhalb des Intervalls (T) mit einer Abtastrate gemessen werden, deren Frequenz um eine Größenordnung über der Frequenz der systembedingten Druckschwankungen im Förderkreislauf der Pumpe liegt.

9. Verfahren nach einem der Ansprüche 1 bis 8, **dadurch gekennzeichnet, dass** der Mittelwert aus einer Anzahl von Stromwerten ermittelt wird, die einer n-ten Potenz von 2 entspricht.

10. Maschinenlesbarer Datenträger (7) mit einem Programm, wobei der Datenträger (7) der Motorregelung (3) eines zum Antrieb einer Pumpe (1) dienenden Elektromotors (2) zugeordnet ist, wobei das Programm eine Befehlsfolge enthält, bei deren Ausführung durch einen Prozessor (8) ein Verfahren nach einem der Ansprüche 1 bis 9 ausgeführt wird.

11. Motorregelung (3) für einen Elektromotor (2) zur Ausführung eines Verfahrens nach einem der Ansprüche 1 bis 9.

12. Elektromotor (2) zum Antrieb einer Pumpe (1), **dadurch gekennzeichnet, dass** der Elektromotor (2) über eine Motorregelung (3) nach Anspruch 11 verfügt, wobei der Elektromotor (2) vorzugsweise als elektrisch kommutierter Elektromotor (2) ausgeführt ist.

13. Pumpe (1) zur Förderung eines Fluids, **dadurch gekennzeichnet, dass** die Pumpe (1) einen Elektromotor (2) nach Anspruch 12 als Antrieb aufweist.

14. Pumpe (1) nach Anspruch 13, **dadurch gekennzeichnet, dass** die Pumpe (1) als Membranpumpe ausgeführt ist.

15. Vorrichtung (9) zur Abgasnachbehandlung, mit einer Pumpe (1), durch die eine Flüssigkeit unter Druck gesetzt und über zumindest eine Auslassvorrichtung (12) in den Abgasstrang (11) einer Verbrennungskraftmaschine (10) eingespritzt oder eingesprüht werden kann, **dadurch gekennzeichnet, dass** die Pumpe (1) nach Anspruch 13 oder 14 ausgeführt ist.

## Claims

1. A method of monitoring an electric motor (2) serving to drive a pump (2), wherein within a time interval (T) current values are measured, an average value of the current values measured is determined and said average value is compared to a predetermined reference value, wherein the method extends to controlling the electric motor (2), wherein the current values measured reflect the profile of the winding current of the electric motor (2) and, irrespective of whether they can be associated with an instantaneous maximum of the current profile, are included in determining the average value, and wherein the average value is considered by the motor control (3) as input parameter, **characterized in that** the time interval (T) is greater than a period duration (P) resulting due to system-inherent periodically recurring pressure fluctuations in the feed circuit of the pump (1).

2. The method according to claim 1, **characterized in that** a maximum permissible value for the motor feed current predetermined by the motor control (3) is reduced if the average value of the current values measured is greater than the predetermined reference value.

3. The method according to claim 2, **characterized in that** the maximum permissible value for the motor feed current is reduced by the difference between average value and reference value.

4. The method according to claim 3, **characterized in that** the differences are summed up by an integrating controller and are subtracted from the maximum permissible value for the motor feed current until the resulting pressure in the system has decreased and the average value of the winding current thus drops again below the reference value.

5. The method according to any of claims 2 to 4, **characterized in that** the maximum permissible value for the motor feed current is reduced at the most to half of the reference value.

6. The method according to any of claims 2 to 5, **characterized in that** the maximum permissible value for the motor feed current is increased again as soon as the permissible average value of the current values measured drops below the reference value.

7. The method according to any of claims 1 to 6, **characterized in that** the electric motor (2) is of multiphase configuration, with the current values being measured at the base point (6) of the converter (4).

8. The method according to any of claims 1 to 7, **characterized in that** the current values within the interval (T) are measured using a sampling rate with a frequency that is one order of magnitude higher than the frequency of the system-inherent pressure fluctuations in the feed circuit of the pump.

9. The method according to any of claims 1 to 8, **characterized in that** the average value is determined from a number of current values which corresponds to an n^{th} power of 2.

10. A machine-readable data carrier (7) comprising a program, wherein the data carrier (7) is allocated to the motor control (3) of an electric motor (2) serving to drive a pump (2), wherein the program contains a command sequence wherein, upon execution thereof by a processor (8), a method according to any of claims 1 to 9 is carried out.

11. A motor control (3) for an electric motor (2) for performing a method according to any of claims 1 to 9.

12. An electric motor (2) for driving a pump (1), **characterized in that** the electric motor (2) comprises a motor control (3) according to claim 11, wherein the electric motor (2) preferably is configured as an electronically commutated electric motor (2).

13. A pump (1) for feeding a fluid, **characterized in that** the pump (1) comprises an electric motor (2) according to claim 12 as drive.

14. The pump (1) according to claim 13, **characterized in that** the pump (1) is configured as a membrane pump.

15. A device (9) for exhaust gas aftertreatment, comprising a pump (1) through which a liquid can be pressurized and, via at least one outlet device (12), can be injected or sprayed into the exhaust gas system (11) of an internal combustion engine (10), **characterized in that** the pump (1) is configured according to claim 13 or 14.

## Revendications

1. Procédé de surveillance d'un moteur électrique (2) servant à entraîner une pompe (1), dans lequel des valeurs de courant sont mesurées dans un intervalle de temps (T), une valeur moyenne des valeurs de courant mesurées est déterminée et cette valeur moyenne est comparée à une valeur de référence prédéterminée, le procédé s'étendant à la commande du moteur électrique (2), dans lequel les valeurs de courant mesurées représentent l'évolution du courant d'enroulement du moteur électrique (2) et sont incluses dans la détermination de la valeur moyenne, qu'elles correspondent ou non à un maximum instantané de l'évolution du courant, et dans lequel la valeur moyenne est prise en compte comme paramètre d'entrée par la commande du moteur (3), **caractérisé en ce que** l'intervalle de temps (T) est supérieur à une période (P) qui résulte de fluctuations de pression liées au système se répétant périodiquement dans le circuit de transport de la pompe (1).

2. Procédé selon la revendication 1, **caractérisé en ce qu'**une valeur maximale admissible pour le courant d'alimentation du moteur, prédéterminée par la commande de moteur (3), est réduite si la valeur moyenne des valeurs de courant mesurées est supérieure à la valeur de référence prédéterminée.

3. Procédé selon la revendication 2, **caractérisé en ce que** la valeur maximale admissible pour le courant d'alimentation du moteur est réduite de la différence entre la valeur moyenne et la valeur de référence.

4. Procédé selon la revendication 3, **caractérisé en ce que** les différences sont intégrées au moyen d'un régulateur intégral et soustraites de la valeur maximale admissible pour le courant d'alimentation du moteur jusqu'à ce que la pression résultante dans le système ait diminué et que la valeur moyenne du courant d'enroulement passe ainsi à nouveau sous la valeur de référence.

5. Procédé selon l'une des revendications 2 à 4, **caractérisé en ce que** la valeur maximale admissible pour le courant d'alimentation du moteur est réduite au plus à la moitié de la valeur de référence.

6. Procédé selon l'une des revendications 2 à 5, **caractérisé en ce que** la valeur maximale admissible pour le courant d'alimentation du moteur est à nouveau augmentée dès que la valeur moyenne des valeurs de courant mesurées devient inférieure à la valeur de référence.

7. Procédé selon l'une des revendications 1 à 6, **caractérisé en ce que** le moteur électrique (2) est conçu pour être polyphasé, les valeurs de courant étant mesurées à la base (6) du convertisseur (4).

8. Procédé selon l'une des revendications 1 à 7, **caractérisé en ce que** les valeurs de courant à l'intérieur de l'intervalle (T) sont mesurées avec un taux d'échantillonnage dont la fréquence est d'un ordre de grandeur supérieur à la fréquence des fluctuations de pression induites par le système dans le circuit de transport de la pompe.

9. Procédé selon l'une des revendications 1 à 8, **caractérisé en ce que** la valeur moyenne est déterminée à partir d'un nombre de valeurs de courant qui correspond à une nième puissance de 2.

10. Support de données (7) lisible par machine avec un programme, le support de données (7) étant associé à la commande de moteur (3) d'un moteur électrique (2) servant à entraîner une pompe (1), le programme contenant une séquence de commandes, pendant l'exécution de laquelle un procédé selon l'une des revendications 1 à 9 est exécuté par un processeur (8).

11. Commande de moteur (3) pour un moteur électrique (2) pour exécuter un procédé selon l'une des revendications 1 à 9.

12. Moteur électrique (2) pour l'entraînement d'une pompe (1), **caractérisé en ce que** le moteur électrique (2) présente une commande de moteur (3) selon la revendication 11, le moteur électrique (2) étant de préférence conçu comme un moteur électrique à commutation électrique (2).

13. Pompe (1) pour le transport d'un fluide, **caractérisée en ce que** la pompe (1) présente un moteur électrique (2) selon la revendication 12 comme entraînement.

14. Pompe (1) selon la revendication 13, **caractérisée en ce que** la pompe (1) est conçue comme une pompe à membrane.

15. Dispositif (9) pour le post-traitement des gaz d'échappement, comprenant une pompe (1) au moyen de laquelle un liquide est mis sous pression et injecté ou pulvérisé par au moins un dispositif de sortie (12) dans le système d'échappement (11) d'un moteur à combustion interne (10), **caractérisé en ce que** la pompe (1) est réalisée selon la revendication 13 ou 14.
